# EUROPEAN PATENT APPLICATION

(11) **EP 2 787 740 A1**
(43) Date of publication of application: **08.10.2014**
(21) Application number: 14161247.3
(22) Date of filing: 24.03.2014
(51) Int. Cl.: H04N 21/41

(54) **Control of a multimedia output device by a multimedia communication apparatus connected via a router**

(30) Priority: 03.04.2013 FI 20135317
(71) Applicant: Spotlightbros, Inc., Dover, DE 19901 (US)
(72) Inventor: Luiro, Vesa, 14057 Berlin (DE); Cohen, Beniamin, 02600 Espoo (FI)
(74) Representative: Espatent Oy

(57) **Abstract**

A multimedia processing apparatus includes a communication interface for communicating with a multimedia router apparatus, a multimedia controlling apparatus, and an A/V output apparatus; at least one processor; and at least one memory including computer program code; the at least one memory and the computer program code configured to, with the at least one processor, cause the multimedia processing apparatus to: connect the multimedia processing apparatus via a first local connection to the A/V output apparatus and via a second local connection to the multimedia router apparatus; receive multimedia data from a plurality of multimedia data sources; receive a source signal from the multimedia controlling apparatus in response to a user selection; process the multimedia data from at least one of the plurality of multimedia data sources based on the source signal; and provide the processed multimedia data for the A/V apparatus.

## Description

### TECHNICAL FIELD

The present application generally relates to a method, a system and an apparatus for providing multimedia data.

### BACKGROUND ART

World of entertainment has changed enormously during the past decade. Consumers' lifestyles in developed countries have also changed dramatically creating new demands and desires for entertainment - for its form, quality and availability. However, technology has not followed new requirements and people may feel handicapped in many ways while trying to compensate the lack of tools from the market themselves, and miserably failing in doing so.

About 150-200 million flat screen TV's, most of them HD capable, have been sold in the USA during the past five years. Some of them are supposed to be smart and most of them are connected - connected to other devices like set-top boxes, video gaming consoles, Blu-ray and DVD players and home theater systems - but currently only about 10% of the TV's are connected to Internet.

Today's TV's are limited with computing power struggling to run a high quality video from the Internet, for example. The interface for controlling today's TV experience is based on dummy remote controllers. They are devices made for channel hopping and not made to help the user to find something interesting to watch or play. Such remote controllers are definitely not personal or intuitive to use but yet they are the only access point and user interface for TV today.

Typically user finds it easier to press a visual icon of a game console on a touch screen device close to user's eyes and start gaming. Typical user do not want to use a plurality of remote controllers by pressing buttons with cryptic markings and looking at menu screen 12 feet away showing things like input source HDMI2 or AV1. Very often at this point of the setup process a HDMI language expert of the house, if any, is called to help because of the unnecessary complexity and user interface from the previous millennium.

In a nutshell consumers are left out from some of the most exciting multimedia data content and services that are available to them with big screen enjoyment. Current connected TV's are technically difficult to master even with the help of those 4.5 remote controllers that each living room in average has today. There is clearly a need for a new architecture to manage the challenges that consumers are facing today when setting up multimedia data service using their TV apparatus. Furthermore, improved methods for connectivity and usage for available resources is needed.

### SUMMARY

According to a first example aspect of the invention there is provided a multimedia processing apparatus comprising:
a communication interface for communicating with a multimedia router apparatus, a multimedia controlling apparatus, and an A/V output apparatus;
at least one processor; and
at least one memory including computer program code;
the at least one memory and the computer program code configured to, with the at least one processor, cause the multimedia processing apparatus to:
   connect the multimedia processing apparatus via a first local connection to the AN output apparatus and via a second local connection to the multimedia router apparatus;
   receive multimedia data from a plurality of multimedia data sources;
   receive a source signal from the multimedia controlling apparatus in response to a user selection;
   process the multimedia data from at least one of the plurality of multimedia data sources based on the source signal; and
   provide the processed multimedia data for the A/V apparatus.

In an embodiment, the at least one memory and the computer program code configured to, with the at least one processor, cause the multimedia processing apparatus to:
store the processed multimedia data from at least two multimedia data sources as favorite multimedia data in a user profile maintained by a system server;
form a virtual multimedia data channel based on the favorite multimedia data; and
provide the processed multimedia data of the virtual multimedia data channel for the A/V apparatus.

In an embodiment, the multimedia processing apparatus is connected via a first local connection to the AN output apparatus and via a second local connection to the multimedia router apparatus.

In an embodiment, the multimedia processing apparatus is connected via a fourth local connection to a local multimedia apparatus.

In an embodiment, the first and the fourth local connection comprises at least one of the following:
an infrared (IR) connection;
a SCART cable;
a HDMI cable;
a RCA cable;
a wireless local area network (WLAN) connection; and
a wired local area network (LAN) connection.

In an embodiment, the second local connection comprises at least one of the following:
an Ethernet connection (LAN); and
a wireless local area network (WLAN) connection.

In an embodiment, the at least one memory and the computer program code configured to, with the at least one processor, cause the multimedia processing apparatus to:
collect behavioral data based on at least one of the received multimedia data, received source signal and processed multimedia data; and
transmit the collected behavioral data for a system server.

In an embodiment, the multimedia processing apparatus further comprises a beacon device for providing wireless control signals over a fifth local connection to at least one of the following devices:
an A/V apparatus;
a local multimedia apparatus; and
a multimedia controlling apparatus.

In an embodiment, the fifth local connection comprises at least one of the following:
an infrared (IR) connection;
a wireless non-cellular connection; and
a wireless local area network (WLAN) connection.

According to a second example aspect of the invention there is provided a method comprising:
connecting a multimedia processing apparatus to an A/V output apparatus and to a multimedia router apparatus;
receiving, by the multimedia processing apparatus, multimedia data from a plurality of multimedia data sources;
receiving a source signal, by the multimedia processing apparatus, from the multimedia controlling apparatus in response to the user selection;
processing the multimedia data from at least one of the plurality of multimedia data sources based on the source signal; and
providing the processed multimedia data for the AN apparatus.

According to a third example aspect of the invention there is provided a computer program embodied on a computer readable medium comprising computer executable program code, which when executed by at least one processor of a multimedia processing apparatus, causes the multimedia processing apparatus to:
connect the multimedia processing apparatus via a first local connection to the A/V output apparatus and via a second local connection to the multimedia router apparatus;
receive multimedia data from a plurality of multimedia data sources;
receive a source signal from the multimedia controlling apparatus in response to a user selection;
process the multimedia data from at least one of the plurality of multimedia data sources based on the source signal; and
provide the processed multimedia data for the A/V apparatus.

According to a fourth example aspect of the invention there is provided a multimedia controlling apparatus comprising:
a communication interface for communicating with a multimedia router apparatus and a multimedia processing apparatus;
a user input device;
at least one processor; and
at least one memory including computer program code;
the at least one memory and the computer program code configured to, with the at least one processor, cause the multimedia controlling apparatus to:
   connect the multimedia controlling apparatus to the multimedia router apparatus;
   receive multimedia data from a plurality of multimedia data sources;
   provide information of the plurality of multimedia data sources for a user on a display of the multimedia controlling apparatus;
   receive user selection information for at least one of the plurality of multimedia data sources;
   transmit a source signal for the multimedia processing apparatus in response to user selection information;
   process the multimedia data from the at least one of the plurality of multimedia data sources based on the source signal; and
   provide at least one multimedia data on the display of the multimedia controlling apparatus based on the user selection information.

In an embodiment, the at least one memory and the computer program code configured to, with the at least one processor, cause the multimedia controlling apparatus to:
provide information of the processed multimedia data from at least two multimedia data sources to be stored as favorite multimedia data in a user profile maintained by a system server;
form a virtual multimedia data channel based on the favorite multimedia data; and
provide at least one multimedia data of the virtual multimedia data channel on the display of the multimedia controlling apparatus based on the user selection information.

In an embodiment, the user input device comprises at least one of the following:
a touch-sensitive display;
a touchpad;
a motion sensor; and
a keypad.

In an embodiment, the multimedia controlling apparatus further comprises:
a communication interface for communicating with a local multimedia apparatus using a sixth local connection, wherein the sixth local connection comprises at least one of the following:
   an infrared (IR) connection;
   a wireless non-cellular connection; and
   a wireless local area network (WLAN) connection.

In an embodiment, the at least one memory and the computer program code configured to, with the at least one processor, cause the multimedia controlling apparatus to:
detect a gesture on the touch-sensitive display by a user;
determine a control signal based on the detected gesture; and
transmit the control signal for the multimedia processing apparatus.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic picture of a system according to an example embodiment of the invention;
- Fig. 2: presents an example block diagram of a multimedia controlling apparatus in which various embodiments of the invention may be applied;
- Fig. 3: presents an example block diagram of an A/V output apparatus in which various embodiments of the invention may be applied;
- Fig. 4: presents an example block diagram of a server apparatus in which various embodiments of the invention may be applied;
- Fig. 5: presents an example block diagram of a multimedia processing apparatus in which various embodiments of the invention may be applied;
- Fig. 6: shows a flow diagram showing operations of the multimedia processing apparatus in accordance with an example embodiment of the invention;
- Fig. 7: shows a flow diagram showing operations of the multimedia controlling apparatus in accordance with an example embodiment of the invention;
- Fig. 8: shows a flow diagram showing operations of quality of service implementation in accordance with an example embodiment of the invention;
- Fig. 9: shows a flow diagram showing operations of service analytics implementation in accordance with an example embodiment of the invention;
- Fig. 10: shows a flow diagram showing operations of virtual channel hopping in accordance with an example embodiment of the invention;
- Fig. 11: shows a flow diagram showing operations of intelligent standby in accordance with an example embodiment of the invention; and
- Fig. 12: shows a flow diagram showing operations of synchronization of multimedia content in accordance with an example embodiment of the invention.

### DETAILED DESCRIPTION

Current evolution of TV's is to integrate more computing performance and features into TV set. However, there is a fundamental mismatch in evolution in different areas of technology. Content and games are evolving with very high speed and require constantly more performance. We can see this technology cycle renewing every 2 years. However, TV's are bought to households for much longer periods, say, 5 years.

Remote controllers are not proven to be aiding competitiveness of TV's. Consumers are not regarding remote as a key decision point for them while buying a TV thus manufacturers have not put too much effort to develop them. However, remote controller is the core defining factor for the usability while using the TV set. This is especially true with new features combined with connectivity.

Consumers are having many different devices hooked with TV. These devices are from different technological eras, supporting different media formats and providing different features or services for consumers. These can be for example DVD and Blu-ray players, set-top-boxes and game consoles. Because of this consumers are having 4.5 remotes in average in each living room. Controlling these devices can be very challenging and confusing.

Traditionally even the latest media devices are not supporting all media formats. This creates huge hurdles and disappointment for consumers while trying to explore wider area of entertainment.

Remote controllers are not working reliably or not providing enough information to user. Current products have significant problems in usage. Widely used IR needs line-of-sight and this is a major problem when people want to hide the numerous devices they have in their living rooms. Even more advanced radio controlled remotes, not talking about IR, are not informing about quality of service and not giving feedback about the state of the service in general which results desperate moments in basic usage cases.

Marketers and advertisement companies are lacking information in order to provide more contextual, local, and relevant ads to consumers. Current methodology is mainly based on statistics and big numbers but this is not enough. There are companies offering second screen services which potentially collect more rich information but that is not in the right level either. More importantly consumers need to want to actively participate into how they would be served.

Setting up a new device can be too much for many consumers. Current highly technical devices include number of interfaces and, partly related to those, settings which are totally unknown for most of the population. This creates unnecessary anxiety and can even make the whole service useless thus totally failing from the very first moment.

Internet is gradually changing the way how content is delivered to consumers' homes and how it is consumed. At the same time some behaviors, which make TV a perfect entertainment unit are put into danger. Consumers want to relax and sometimes enjoy TV very passively. This is very common way with broadcasted channels. While content is turning into Internet there are not necessarily traditional channels but content - videos, movies, and programs - are served separately. This forces consumers to be active on the content that they are consuming and therefore sometimes not providing the desired passive experience.

Traditional low-tech IR remote controllers are always "awake" and ready to send a command. This is very convenient for consumers. However, when more complex devices are used there are certain reasons why they need to be put into sleep mode or idle state after some time. These reasons are mainly battery consumption and because the bright screen is annoying in the dark environment. This means that otherwise potentially better remote controllers need an extra command from consumer before they can be used for their purpose.

Consumers are changing thoughts, chatting, tweeting, and i.e. acting increasingly social about what they experience. TV is traditionally a broadcasting media but current evolution is separating schedules and freeing time aspect from the TV experience. This is due to first DVRs and now Internet content. Consumers, people in general, still want to feel belonging into a group, jointly experiencing, but with TV this is decreasing trend due to new technologies. Consumers do not have proper means of 1) indicating clearly about what they are commenting, 2) they cannot instantly share the moment with another person experiencing the same thing and 3) they have practically no means of inviting other persons to join them to watch e.g. football game if they are geographically separated without means of meeting others in person.

There are no good tools for saving favorite media from multiple channels (e.g. set-top-box, Internet, broadcast) in a format that can be 1) repeated or 2) shared.

Current remote controlling situation forces consumer to change eye focus constantly between the remote controller and TV. This creates nausea and results very bad experience. Same time there is a lot of "waste" in UI's (in case of second screen concepts) in a form of repetition as displays showing information are not designed to be together.

Consumers are increasingly watching videos from Internet. This is a vast new source of rich content in parallel with broadcasted media and most traditional channel offerings are also turning into the net. However, there are many challenges related to user experience while streaming or downloading videos from the web. Viewers are seeing this as a delay of service after selecting play (streaming). Consumers have used to immediate playback with e.g. DVDs or when selecting broadcasted channel. Reduced user experience with new media is therefore a real problem.

In general, when talking about video consumption and handling videos in different embodiments such features cover all methods of delivery for usage such as streaming, downloading and running locally.

In the following description, like numbers denote like elements.

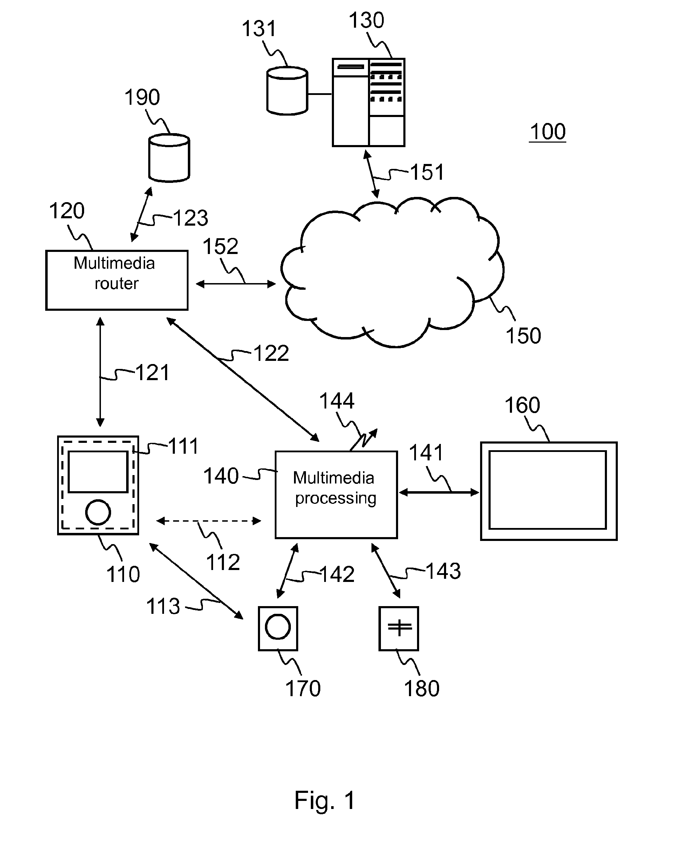

Fig. 1 shows a schematic picture of a system 100 according to an example embodiment of the invention.

The system 100 is configured to provide a home entertainment system maximizing good user experience and sustaining it. A technical architecture of the system 100 is illustrated for components, their relations and communication between each other in addition to needed basic functionality in HW and SW. At the minimum, the system 100 comprises a display for providing the multimedia for the user, a processing apparatus for processing the multimedia data to be provided for the user, a controlling apparatus for controlling the processing apparatus and network infrastructure for providing connectivity between the apparatuses. Optionally, further apparatuses may be added, such as peripheral devices for providing or processing the multimedia data and communication devices for connecting the peripheral devices to the system 100.

A multimedia controlling apparatus 110, such as a tablet, a smartphone, a laptop computer or a PDA comprises a user interface 111 for a user. The multimedia controlling apparatus 110 is capable of downloading and locally executing software program code. The software program code may be a client application of a service whose processing application is running on a multimedia processing apparatus 140 of the system 100. The multimedia controlling apparatus 120 may comprise a touch-sensitive display 111, for example. The multimedia controlling apparatus 110 is configured to be connectable to a multimedia router apparatus 120 over a local connection 121. The local connection 121 may comprise a wireless local area network (WLAN), for example.

The multimedia router apparatus 120 provides access between local apparatuses 110, 140, 160 and access between a wide area network 150, such as Internet, and the local apparatuses 110, 140, 160. The multimedia router apparatus provides local data connections 121, 122 for the multimedia controlling apparatus 110 and a multimedia processing apparatus 140. The local data connections 121, 122 may comprise wireless local area network (WLAN), Ethernet or universal serial bus (USB), for example. The multimedia router apparatus 120 is connected to the wide area network 150, such as Internet, over a network connection 152. The network connection 152 may comprise a cable TV or an ADSL connection, for example.

In an embodiment, a network attached storage (NAS) 190 may be connected to the multimedia router apparatus 120 as a multimedia data source. The network attached storage (NAS) may comprise multimedia data for the multimedia processing apparatus 140. The network attached storage (NAS) 190 is connected to the multimedia routing apparatus 120 via a local data connection 123. The local data connection 123 may comprise HDMI, USB, WLAN or Ethernet, for example.

In an embodiment, perceived quality of service is assured between the multimedia controlling apparatus 110 and the multimedia processing apparatus 140. Method and process is described on how to ensure the best user experience with a setup including controlling and processing apparatuses work and communicate together. Further, these apparatuses know their own status and network's status but cannot necessarily do much if the network infrastructure fails. The user will be guided based on the severity of the situation.

A protocol is described in which quality of service is monitored within the network where the multimedia apparatuses 110, 140 are working, also between these apparatuses. The monitoring is done intelligently so that only when status is interesting the status information will be recorded and communicated to the user but only if necessary. This means also monitoring other aspects of the usage scenario such as what user is doing and what system is processing and what is expected to be executed next.

The multimedia processing apparatus 140 is controlled by the multimedia controlling apparatus 110 over a virtual control connection 112. Actually the control signal 112 may travel through local connections 121, 122 but for the sake of clarity the control signal 112 is illustrated with a dashed line between the multimedia controlling apparatus 110 and the multimedia processing apparatus 140. The multimedia processing apparatus 140 receives multimedia data from different parts of the system 100 and control signals from the multimedia controlling apparatus and is responsible for the processing of the multimedia data for an A/V apparatus 160- The multimedia processing apparatus 140 is connected over a local connection 141 to the A/V apparatus for providing the processed multimedia data to be presented to the user. The multimedia processing apparatus 140 is configured to process the multimedia data, control quality of service, provide synchronization, collect user behavioral data, and enable service system setup and buffering, for example.

In an embodiment, the multimedia controlling apparatus 110 may further comprise a communication interface for communicating with a local device 160-180, such as a local multimedia apparatus 170, using a sixth local connection 113, wherein the sixth local connection 113 comprises at least one of the following an infrared (IR) connection; a wireless non-cellular connection; and a wireless local area network (WLAN) connection. The wireless non-cellular connection may comprise industrial, scientific and medical (ISM) radio bands that are radio bands (portions of the radio spectrum) reserved internationally for the use of radio frequency (RF) energy for industrial, scientific and medical purposes.

In an embodiment, at least one local multimedia apparatus 170, 180 may be connected to the multimedia processing apparatus 140 as a multimedia data source. Such apparatus may comprise a digital camera 170 or a digital video recorder (DVR) 180, for example. The local multimedia apparatus 170, 180 is connected to the multimedia processing apparatus 140 via a local data connection 142, 143. The local data connection 142, 143 may comprise HDMI, USB or SCART, for example.

In an embodiment, the system 100 comprises an A/V apparatus 160 configured to be connectable to the multimedia processing apparatus 140 over a local connection 141. The local connection 141 may comprise a wired connection or a wireless connection. The wired connection may comprise Universal Serial Bus (USB), High-Definition Multimedia Interface (HDMI), SCART interface or RCA interface, for example. The wireless connection may comprise Bluetooth™, Radio Frequency Identification (RF-ID) or wireless local area network (WLAN), for example. Near field communication (NFC) may be used for device identification between the A/V apparatus 160 and the multimedia processing apparatus 140, for example. The A/V apparatus 160 may comprise a television, for example.

In an embodiment, the multimedia processing apparatus 140 may further comprise a beacon device 144 for providing wireless control signals over a fifth local connection to any of the local devices, such as an A/V apparatus 160, a local multimedia apparatus 170, 180; and a multimedia controlling apparatus 110. The fifth local connection comprises at least one of the following: an infrared (IR) connection; and a wireless local area network (WLAN) connection. Such beacon device 144 is especially useful for controlling IR controllable devices 160-180 that are out of reach of HDMI CEC and thus not necessarily controllable over local connections 141-143, for example.

In an embodiment, the system 100 comprises a server apparatus 130, which comprises a storage device 131 for storing and providing service data, service metrics and subscriber information, over data connection 151. The service data may comprise configuration data, account creation data and multimedia data, for example. The service metrics may comprise operator information for use in both user identification and preventing service abuse, as at least one of the controlling apparatus 110 and the multimedia processing apparatus 140 may be protected by a user account or a service account details.

In an embodiment, a proprietary application in the multimedia controlling apparatus 110 or the multimedia processing apparatus 140 may be a client application of a service whose server application is running on the server apparatus 130 of the system 100. The proprietary application may capture the user input data for the service and provide the user output data, for the service using the A/V output apparatus 160. In an embodiment, configuration information between the multimedia processing apparatus 140, the multimedia controlling apparatus 110 and the system server 130 is transceived via the first connections 121, 122, 150, 151, 152 automatically. Thus the user of the multimedia controlling apparatus 110 may not need to do any control for the service. The system server 130 may also maintain account creation process details for the service, such as attaching new apparatuses to the system 100.

In an embodiment, the multimedia controlling apparatus 110 may comprise an A/V input apparatus, such as a microphone or a camera.

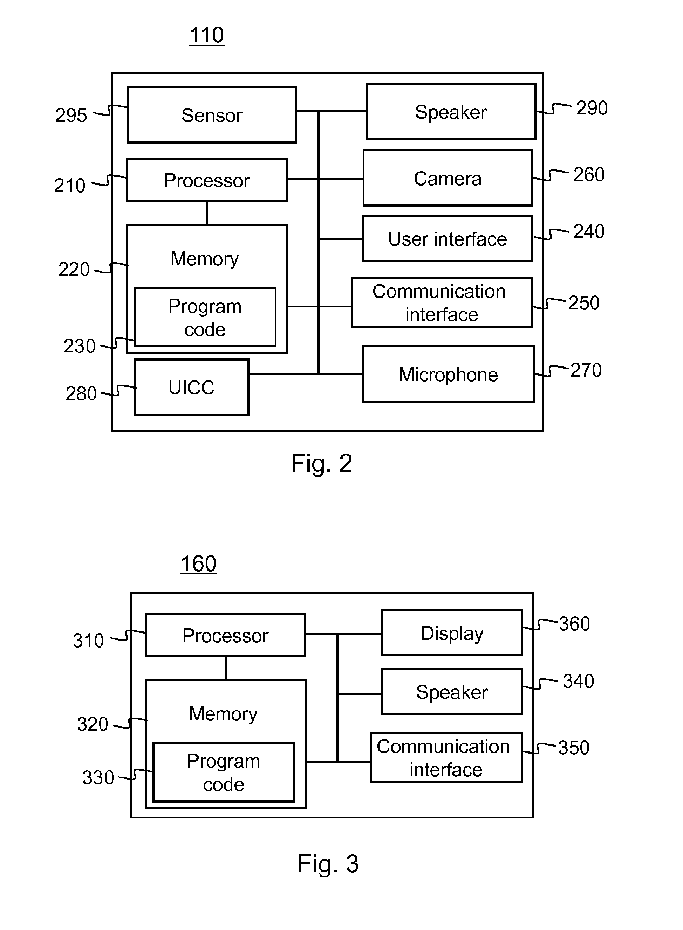

Fig. 2 presents an example block diagram of a multimedia controlling apparatus 110 in which various embodiments of the invention may be applied. The multimedia controlling apparatus 110 may be a user equipment (UE), a tablet, a smartphone, a user device or apparatus, such as a mobile terminal, or other communication device comprising a communication interface, a user interface and optionally a camera, a speaker and a microphone.

The general structure of the multimedia controlling apparatus 110 comprises a user interface 240, a communication interface 250, a microphone 270, a camera 260, a speaker 290, a sensor 295, a processor 210, and a memory 220 coupled to the processor 210. The multimedia controlling apparatus 110 further comprises software 230 stored in the memory 220 and operable to be loaded into and executed in the processor 210. The software 230 may comprise one or more software modules and can be in the form of a computer program product. The multimedia controlling apparatus 110 may further comprise a universal integrated circuit card (UICC) 280. Not all elements of Fig. 2 are necessary but optional for the multimedia controlling apparatus 110, such as the sensor 295, the UICC 280, the speaker 290, the camera 260 and the microphone 270.

The processor 210 may be, e.g., a central processing unit (CPU), a microprocessor, a digital signal processor (DSP), a graphics processing unit, or the like. Fig. 2 shows one processor 210, but the multimedia controlling apparatus 110 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The multimedia controlling apparatus 110 may comprise a plurality of memories. The memory 220 may be constructed as a part of the multimedia controlling apparatus 110 or it may be inserted into a slot, port, or the like of the multimedia controlling apparatus 110 by a user. The memory 220 may serve the sole purpose of storing data, or it may be constructed as a part of an apparatus serving other purposes, such as processing data.

The user interface 240 may comprise circuitry for receiving input from a user of the multimedia controlling apparatus 110, e.g., via a keyboard, a touchpad, a motion sensor, a touch-screen of the multimedia controlling apparatus 110, speech recognition circuitry, gesture recognition circuitry or an accessory device, such as a headset or a remote controller, for example. Furthermore, the user interface 240 may comprise circuitry for providing output for the user via a display, a touch-sensitive display or a lightning device, for example.

The camera 260 may be a still image camera or a video stream camera, capable for creating multimedia data for the user or the used service.

The speaker 290 is configured to provide multimedia output audio for the user and to provide user alarm sounds. Such speaker is advantageous especially in case the A/V output apparatus 160 (e.g. TV) is in off/standby mode. The speaker 290 also allows the user to hear the multimedia audio before turning the A/V output apparatus 160 (e.g. TV) on. Thus, the user may start using the multimedia service before switching on the AN output apparatus 160 (e.g. TV), for example.

The microphone 270 is configured to capture user speech information for the multimedia service.

The universal integrated circuit card (UICC) 280 is the smart card used in mobile terminals in GSM and UMTS networks. The UICC 280 ensures the integrity and security of all kinds of personal data, and it typically holds a few hundred kilobytes. In a GSM network, the UICC 280 contains a SIM application and in a UMTS network the UICC 280 contains a USIM application. The UICC 280 may contain several applications, making it possible for the same smart card to give access to both GSM and UMTS networks, and also provide storage of a phone book and other applications. It is also possible to access a GSM network using a USIM application and it is possible to access UMTS networks using a SIM application with mobile terminals prepared for this.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), NFC, GSM/GPRS, CDMA, WCDMA, or LTE (Long Term Evolution) radio module. The wired interface may comprise such as universal serial bus (USB), HDMI, SCART or RCA, for example. The communication interface module 250 may be integrated into the multimedia controlling apparatus 110, or into an adapter, card or the like that may be inserted into a suitable slot or port of the multimedia controlling apparatus 110. The communication interface module 250 may support one radio interface technology or a plurality of technologies. The communication interface module 250 may support one wired interface technology or a plurality of technologies. The multimedia controlling apparatus 110 may comprise a plurality of communication interface modules 250.

A skilled person appreciates that in addition to the elements shown in Fig. 2, the multimedia controlling apparatus 110 may comprise other elements, such as additional microphones, extra speakers, extra cameras, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, multimedia controlling apparatus 110 may comprise a disposable or rechargeable battery (not shown) for powering when external power if external power supply is not available.

In an embodiment, the multimedia controlling apparatus 110 comprises speech or gesture recognition means. Using these means, a pre-defined phrase or a gesture may be recognized from the speech or the gesture and translated into control information for the apparatus 110, for example.

Fig. 3 presents an example block diagram of an A/V output apparatus 160 in which various embodiments of the invention may be applied. The A/V output apparatus 160 may be a television comprising a communication interface, a display and a speaker.

The general structure of the A/V output apparatus 160 comprises a communication interface 350, a display 360, a processor 310, and a memory 320 coupled to the processor 310. The A/V output apparatus 110 further comprises software 330 stored in the memory 320 and operable to be loaded into and executed in the processor 310. The software 330 may comprise one or more software modules and can be in the form of a computer program product.

The processor 310 may be, e.g., a central processing unit (CPU), a microprocessor, a digital signal processor (DSP), a graphics processing unit, or the like. Fig. 3 shows one processor 310, but the A/V output apparatus 160 may comprise a plurality of processors.

The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The A/V output apparatus 160 may comprise a plurality of memories. The memory 320 may be constructed as a part of the A/V output apparatus 160 or it may be inserted into a slot, port, or the like of the A/V output apparatus 160 by a user. The memory 320 may serve the sole purpose of storing data, or it may be constructed as a part of an apparatus serving other purposes, such as processing data.

The speaker 340 may comprise a loudspeaker or multiple loudspeakers. Furthermore, the speaker 340 may comprise a jack for headphones and the headphones. The speaker 340 may also comprise external speakers or external audio devices connected to the A/V apparatus 110, such as home audio systems.

The display 360 may comprise a LED screen, a LCD screen or a plasma screen, for example.

The communication interface module 350 implements at least part of data transmission. The communication interface module 350 may comprise, e.g., a wireless or a wired interface module. The wireless interface may comprise such as a WLAN, Bluetooth, infrared (IR) or radio frequency identification (RF ID) radio module. The wired interface may comprise such as universal serial bus (USB), HDMI, SCART or RCA, for example. The communication interface module 350 may be integrated into the A/V output apparatus 160, or into an adapter, card or the like that may be inserted into a suitable slot or port of the A/V output apparatus 160. The communication interface module 350 may support one radio interface technology or a plurality of technologies. The communication interface module 350 may support one wired interface technology or a plurality of technologies. The A/V output apparatus 160 may comprise a plurality of communication interface modules 350.

A skilled person appreciates that in addition to the elements shown in Fig. 3, the A/V output apparatus 160 may comprise other elements, such as microphones, speakers, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the A/V output apparatus 160 may comprise a disposable or rechargeable battery (not shown) for powering when external power if external power supply is not available.

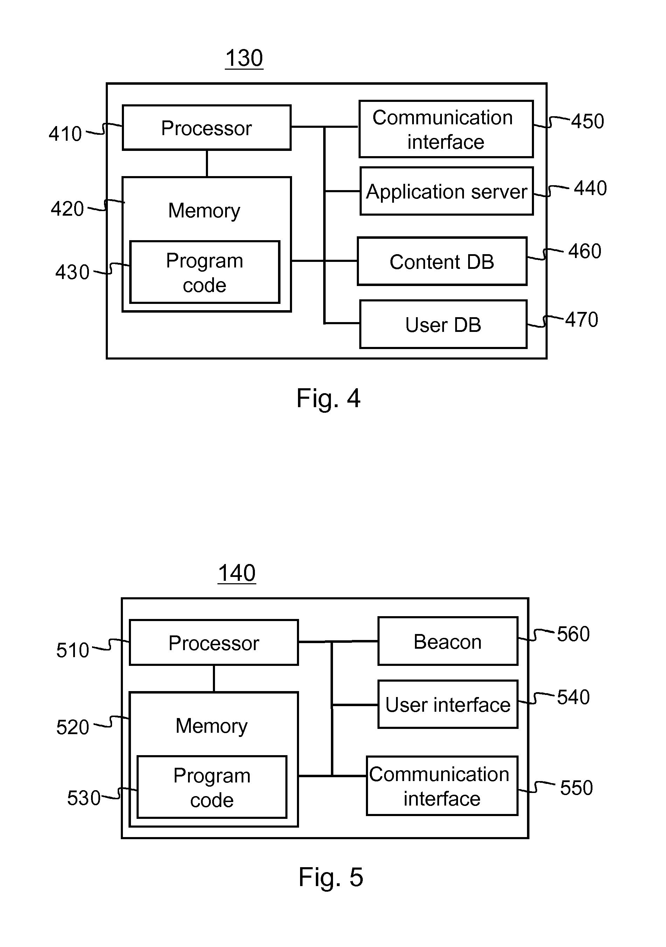

Fig. 4 presents an example block diagram of a server apparatus 130 in which various embodiments of the invention may be applied.

The general structure of the server apparatus 130 comprises a processor 410, and a memory 420 coupled to the processor 410. The server apparatus 130 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the server apparatus 130 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 130 may comprise a plurality of memories. The memory 420 may be constructed as a part of the server apparatus 130 or it may be inserted into a slot, port, or the like of the server apparatus 130 by a user. The memory 420 may serve the sole purpose of storing data, or it may be constructed as a part of an apparatus serving other purposes, such as processing data.

The communication interface module 450 implements at least part of data transmission. The communication interface module 450 may comprise, e.g., a wireless or a wired interface module. The wireless interface may comprise such as a WLAN, Bluetooth, infrared (IR), radio frequency identification (RF ID), GSM/GPRS, CDMA, WCDMA, or LTE (Long Term Evolution) radio module. The wired interface may comprise such as Ethernet or universal serial bus (USB), for example. The communication interface module 450 may be integrated into the server apparatus 130, or into an adapter, card or the like that may be inserted into a suitable slot or port of the server apparatus 130. The communication interface module 450 may support one radio interface technology or a plurality of technologies. Configuration information between the multimedia controlling apparatus 110 and the system server 130 may be transceived using the communication interface 450. Similarly, account creation information between the system server 130 and a service provider may be transceived using the communication interface 450.

An application server 440 provides application services e.g. relating to the user accounts stored in a user database 470 and to the service information stored in a service database 460. The service information may comprise multimedia content information, multimedia content management information or metrics information, for example.

A skilled person appreciates that in addition to the elements shown in Fig. 4, the server apparatus 130 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

Fig. 5 presents an example block diagram of a multimedia processing apparatus 140 in which various embodiments of the invention may be applied.

The general structure of the multimedia processing apparatus 140 comprises a user interface 540, a communication interface 550, a beacon device 560, a processor 510, and a memory 520 coupled to the processor 510. The multimedia processing apparatus 140 further comprises software 530 stored in the memory 520 and operable to be loaded into and executed in the processor 510. The software 530 may comprise one or more software modules and can be in the form of a computer program product. The multimedia processing apparatus 140 does not necessarily comprise all the elements of Fig. 5, for example the user interface 540 and the beacon device 560 may be optional.

In an embodiment, the multimedia processing apparatus 140 may be remotely controlled by an external apparatus, such as the multimedia controlling apparatus 110.

The processor 510 may be, e.g., a central processing unit (CPU), a microprocessor, a digital signal processor (DSP), a graphics processing unit, or the like. Fig. 5 shows one processor 510, but the apparatus 140 may comprise a plurality of processors.

The memory 520 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The multimedia processing apparatus 140 may comprise a plurality of memories. The memory 520 may be constructed as a part of the multimedia processing apparatus 140 or it may be inserted into a slot, port, or the like of the multimedia processing apparatus 140 by a user. The memory 520 may serve the sole purpose of storing data, or it may be constructed as a part of an apparatus serving other purposes, such as processing data.

The user interface 540 may comprise circuitry for receiving input from a user of the multimedia processing apparatus 140, e.g., via a keyboard, graphical user interface shown on the display of the user interface 540 of the multimedia processing apparatus 140, speech recognition circuitry, or an accessory device, such as a headset, and for providing output to the user via, e.g., a graphical user interface or a loudspeaker. Typically the user access and user interface for the multimedia processing apparatus 140 is provided via the multimedia controlling apparatus 110.

The communication interface module 550 implements at least part of radio transmission. The communication interface module 550 may comprise, e.g., a wireless or a wired interface module. The wireless interface may comprise such as a wireless local area network (WLAN), Bluetooth™, infrared (IR), radio frequency identification (RF ID), GSM/GPRS, CDMA, WCDMA, or LTE (Long Term Evolution) radio module. Near field communication (NFC) may be used for device identification between the A/V output apparatus 160 and the multimedia processing apparatus 140. The wired interface may comprise such as universal serial bus (USB), High-Definition Multimedia Interface (HDMI), SCART interface, RCA interface or Ethernet, for example. The communication interface module 550 may be integrated into the multimedia processing apparatus 140, or into an adapter, card or the like that may be inserted into a suitable slot or port of the multimedia processing apparatus 140. The communication interface module 550 may support one radio interface technology or a plurality of technologies. The multimedia processing apparatus 140 may comprise a plurality of communication interface modules 550, both wired and wireless.

In an embodiment, the multimedia processing apparatus may further comprise a beacon device 560 for providing wireless control signals over a fifth local connection to at least one of the following devices: an A/V apparatus; a local multimedia apparatus; and a multimedia controlling apparatus. The beacon device 560 may be integrated to the multimedia processing apparatus 140 or connected to the apparatus 140 as a separate device 560. The fifth local connection comprises at least one of the following: an infrared (IR) connection; a non-cellular wireless connection; and a wireless local area network (WLAN) connection. The beacon device 560 may also be integrated to the communication interface 550 of the apparatus 140.

A skilled person appreciates that in addition to the elements shown in Fig. 5, the multimedia processing apparatus 140may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the multimedia processing apparatus 140may comprise a disposable or rechargeable battery (not shown) for powering when external power if external power supply is not available.

In an embodiment, information about usage patterns or behavioral data for a multimedia source and multimedia data content may be collected. Such patterns and data may be used for predictive multimedia source selection or market intelligence, for example.

In an embodiment, at least two of a multimedia controlling apparatus, a multimedia processing apparatus, a multimedia routing apparatus and an A/V output apparatus may be automatically set up when connected with each other with reduced user interaction.

In an embodiment, channel hopping is provided for multimedia data received from a plurality of multimedia data sources, both local and remote. Such hopping activity is analog to traditional tuner based TV channels but now with universal content combining all available content sources and content. User will perceive exactly the same experience like with traditional TV while the content is not brought to user by readily broadcasted channels but as individual content items or virtual channels. As a user experience while user selects "next" (or similar) then the next content is played meaningfully. To be more specific it does not necessarily mean that e.g. a show or movie would start from the beginning but that they would start with trailer or even from the middle of the stream. The user may also personalize the experience.

In an embodiment, predictive and intelligent standby for multimedia controlling apparatus is provided.

A protocol is defined that enables A/V output apparatus, such as TV, to command wake up of a multimedia controlling apparatus from a sleep mode and put it into a certain mode or launch a certain function.

A next desired function to be executed by the controlling device may be predicted by monitoring played multimedia content and its state, time, other actions or functions in the house, state of the controlling apparatus, movement, profile, state of the AN output apparatus or state of the local or remote network.

In an embodiment, a method is described for tagging and group synchronization for network based multimedia data.

This invention provides universal and external to content (no need to place anything e.g. into metadata container or into header of the media in question) convenient means for

Exact content of multimedia data may be indicated based on metadata information of the multimedia data to recognize the content to be the same or similar enough. The multimedia data may be received from different multimedia sources for different users but still indicated to be the same content for all users. A particular point in the content may be indicated in the multimedia data content (not necessarily a simple timestamp as this might differ in different files). Metadata of the multimedia data content may be converted into a message stream to be synchronized between different users. Thus, viewing of the similar multimedia data content between different users may be synchronized over the network.

Typically users have multiple sources of media such as TV tuner, DVR, home network-attached storage (NAS) and Internet. Source for the content is important for the system but it should be insignificant for the user.

In an embodiment, a combination a plurality of multimedia data sources may be used. Accurate source description and method of discovery for any specific content, content type, or content subclass may be provided. Furthermore, means for following multimedia data content even though the physical source has been changed may be provided. This provides a perfect abstraction to the user so that only thing that the user sees is the content itself without need to bother with technology.

In an embodiment, a process for virtual television channel formation and sharing is provided. Any media and source of content may be stored as a favorite (to be saved/followed/repeated, similar to be saved/followed/repeated/listed) and so combined with a user profile maintained by the system gradually form a living virtual multimedia data channel, such as TV channel. Such virtual channel may be shared within social networks as a repeatable recommendation, as a virtual channel, even though the sources of content for other users can be very different. Virtual channel can also be a bit different for different users as it has multiple layers in channel formation. E.g. if specific show is not available for some user the channel can then recommend another show by genre/cast/director/producer etc.

In an embodiment, a virtual channel will produce a constant stream of content for the user as it would be traditional broadcasted channel, e.g. when show ends another one is played automatically after it without any need of activity from the user.

The user can also personalize the experience, such as defining multimedia controlling device user interface design and setting preferences for displays of the multimedia controlling apparatus and the A/V output apparatus.

The multimedia controlling apparatus provides a significantly improved remote controller for the A/V output apparatus, such as TV, as well.

A second screen, a display of the multimedia controlling apparatus, contains all the controls and additional rich information while TV screen is left entirely for the content, e.g. video. This means a set up where the second screen and TV screen are totally aware of each other's status and become as if they were totally integrated This significantly reduces user's fatigue, improves overall user experience and also provides better means for people with disabilities as the total control is at same place and close to viewer.

A multiple of multimedia controlling apparatuses may be used for controlling the same TV screen or A/V output.

Color-coded highlighting and more specifically reducing colors to gray scale may be used when some item on the UI does not need to be noted but still presented as a part of the list/grid/visual presentation.

Personal profiles within a group of users (e.g. family) may be defined. They may be used as a security mean but also specifically for storing favorites, usage patterns and network behavior (social).

UI gestures may be defined for the multimedia controlling apparatus for general control of the service, such as volume/mute at any state. The user may define and teach the multimedia controlling apparatus for different gestures.

In an embodiment, predictive intelligent buffering is provided. In order to create immediate playback of any content, several videos (or any other content like music) may be processed in advance to wait for the play command. After the user selects "play" the content is played instantly. This means that the system provides means of processing content for playback in parallel, making buffered content readily available for the player and also gives methods for predicting next moves of the user and so limiting intelligently the number of required parallel processes. Predictive intelligent buffering utilizes usage model forecasting that predicts what user will do next based on earlier usage. For example, if some favorite show appears just published, the user might want to select it. Session information gives context to the usage, such as the user is channel hopping, the user has selected a video and is now watching it or if there are any changes in the overall usage context, for example.

Different content sources are predicted or known to be the next selected content and these contents may be processed in parallel. Same logic will be applied to all next contents as soon as the processing computer has capacity to deal with them. Previous content may be kept in memory based on context and models.

In embodiment, different parameters may be used in content selection, such as availability, capacity and timing. For the availability, relevant characteristics comprise if the content is available from a source. Another characteristic is the quality of service available from the source, i.e. what is the expected buffering time and therefore any possible problems with finalizing the tasks. For the capacity, relevant characteristics comprise processor capacity to start pre-processing the content and the available memory size to store the buffered content. For the timing, relevant characteristics comprise information on any other tasks that would overdrive this task and if with these tasks the processor having enough capacity. Furthermore, if the content is predicted to be ran much later, the parameter may define if it is feasible to use memory and CPU time for the task at this very moment, i.e. should the task be postponed and free the capacity to some other tasks. These parameters will be generally used to maintain and improve the total usage scenario in relation to other functions.

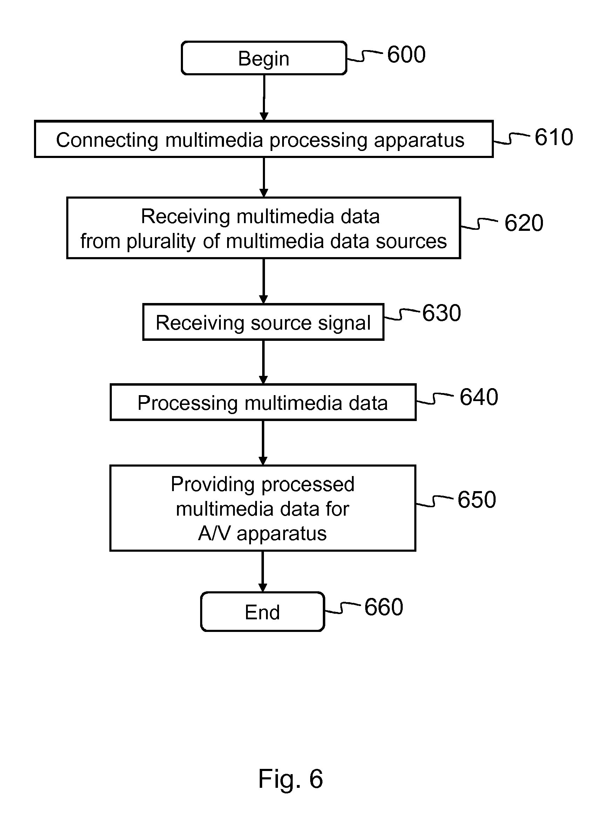

Fig. 6 shows a flow diagram showing operations of a multimedia processing apparatus in accordance with an example embodiment of the invention. In step 600, the method is started. In step 610, a multimedia processing apparatus is connected to an A/V output apparatus and to a multimedia router apparatus. In step 620, multimedia data from a plurality of multimedia data sources is received.

In step 630, a source signal is received, by the multimedia processing apparatus, from a multimedia controlling apparatus in response to the user selection. In step 640, the multimedia data from at least one of the plurality of multimedia data sources is processed based on the source signal. In step 650, the processed multimedia data is provided for the A/V apparatus. The method is ended in step 660.

In an embodiment, a multimedia controlling apparatus and a multimedia processing apparatus are provided to a user. The user may first sign-up to a service, wherein personal data of the user are received. Such data may be provided, for example, through social media login. Furthermore, credit card data may be applied by the user to enable purchasing items of the service. The user may order the controlling apparatus and the processing apparatus via the service. Once received the apparatuses, setup between the apparatuses and the A/V apparatus is required.

In an embodiment, the controlling apparatus comprises an in-built camera that may be used for image recognizing e.g. Wi-Fi routers having a barcode, a QR-code or written identifier for credentials. Using the camera, all apparatuses may be recognized by identifying the apparatuses using the service. Alternatively, the controlling apparatus comprises an in-built microphone and the user reads credentials out loud, they are recognized and stored to the system. WPS (Wi-Fi Protected Setup) method may be used with PIN, a push-button (satellite unit has real or virtual button) or NFC (near field communication; controlling apparatus or an accessory has NFC reading capability). Alternatively, a manual input of credentials by the user may be used. After sharing the credentials, such as Wi-Fi credentials the apparatus setup is ready and login to the service may be done and registration of the apparatus setup and the user to the service may be updated.

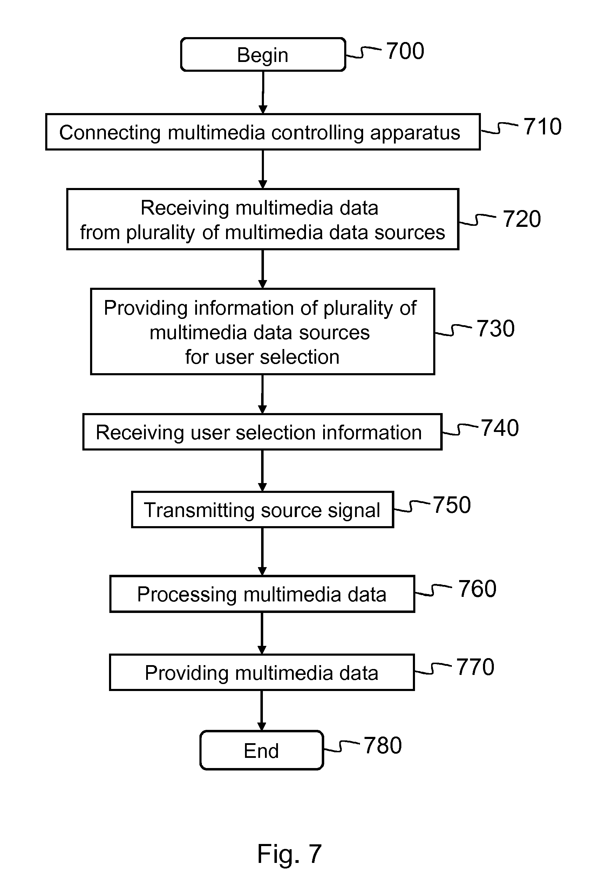

Fig. 7 shows a flow diagram showing operations of a multimedia controlling apparatus in accordance with an example embodiment of the invention. In step 700, the method is started. In step 710, the multimedia controlling apparatus is connected to the multimedia router apparatus. In step 720, multimedia data from a plurality of multimedia data sources is received. In step 730, information of the plurality of multimedia data sources is provided for a user on a display of the multimedia controlling apparatus. In step 740, user selection information for at least one of the plurality of multimedia data sources is received. In step 750, a source signal is transmitted for the multimedia processing apparatus in response to user selection information. In step 760, at least one multimedia data is processed based on the user selection information. In step 770, at least one processed multimedia data is provided on the display of the multimedia controlling apparatus. The method is ended in step 780.

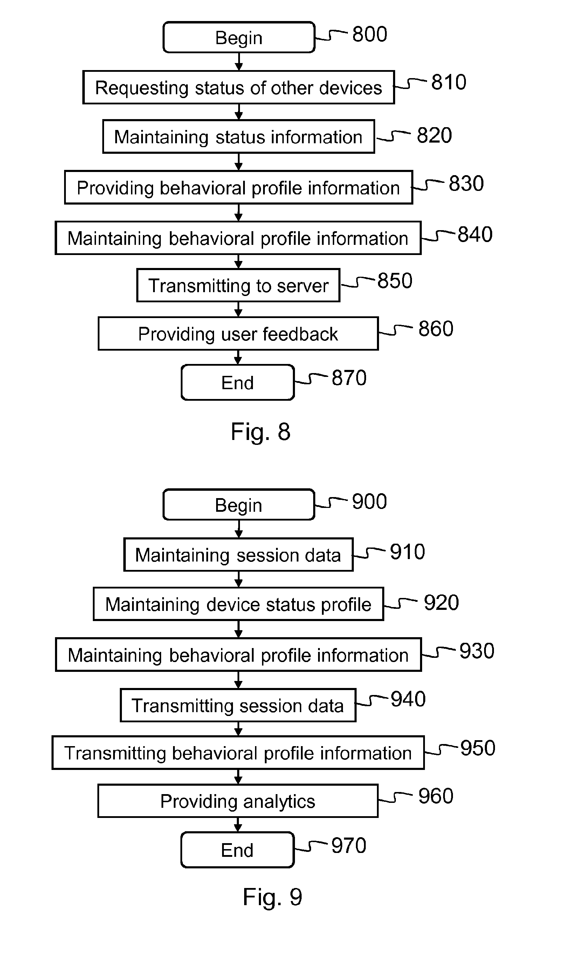

Fig. 8 shows a flow diagram showing operations of quality of service implementation in accordance with an example embodiment of the invention. In step 800, the method is started. In step 810, status of other devices connected to the system is requested. In step 820, at least one of the controlling apparatus and the processing apparatus maintains status information of all connected devices. The status information may be requested by a master device, such as the controlling or processing apparatus, or all devices may send their status information automatically. In step 830, behavioral profile information is provided. The behavioral profile information may be collected by at least one of the controlling and the processing apparatus and reflect the user activity and interests for certain multimedia source, type, language, geographical area, time, etc. In step 840, the behavioral profile information is maintained by at least one of the controlling and the processing apparatus. In step 850, the maintained status information and behavioral profile information may be transmitted to the system server for storing and further analyzing. In step 860, feedback to the user may be provided using the status information and the user behavioral profile information. The feedback may be processed locally by the controlling or processing apparatus or remotely by the system server, and provided to the user via the user interface of the controlling apparatus or the A/V output apparatus, for example. In step 870, the method is ended.

Fig. 9 shows a flow diagram showing operations of service analytics implementation in accordance with an example embodiment of the invention. In step 900, the method is started. In step 910, session data is maintained by a controlling apparatus. The session data may comprise user account information used for logging in to the service by the user via the controlling apparatus. Furthermore the session data may comprise user activity data of the controlling apparatus during the session. In step 920, device status profile is maintained by the processing apparatus. The device status profile may status information of all available devices in the system. In step 930, behavioral profile information is maintained by the processing apparatus. In step 940, the session data is transmitted to the system server by the controlling apparatus. The transmitted session data is encrypted before transmitting the data to the system server. In step 950, the behavioral profile information is transmitted to the system server by the processing apparatus. The transmitted behavioral profile information is encrypted before transmitting the information to the system server. The behavioral profile information may further be processed before transmitting to provide usage model forecast information based on the behavioral profile information. At least one of the behavioral profile information and the usage model forecast information is then encrypted and transmitted to the system server. In step 970, analytics is provided by the system server using at least one of the received session data, device status profile, behavioral profile information, and usage model forecast information. The analytics may comprise, for example, marketing information, advertising information, product information and software update information. In step 970, the method is ended.

In an embodiment, the system may utilize user profile information to seek multimedia content sources that may interest the user. Recommendations based on the user profile may be used to discover multimedia content sources to be stored to favorites for the user. Favorites are a collection of direct sources. However, as an exception series/sequels will be stored as an updating list. When new episode has been published it will be added onto the list. As a part of the system there is a notification mechanism which tells user what has been updated, i.e. which new content is available. Updated favorites may also trigger updating of user profile information and the favorites may be shared with social networks, for example. Sharing with social networks shares direct source to the content as a preferred address. However, as some friends might not have an access to the exact same source content will also be described in general means to enable finding an alternative source if needed. User can also choose to hide the original source.

As an assumption, favorites are the main source for multimedia contents selection process. However, one of the interests towards channels is surprise effect. This must be brought in by having also other sources for channel formation. Such other sources may comprise e.g. recommendations from the system and from the social networks and from all available data.

In an embodiment, virtual channels are a collection of ever changing content. As an assumption they do not include fixed sources (to exact file) to content. This will only be allowed if user specifically requests it. Such approach means that the channel will sometimes play reruns. As an assumption the content is as fresh as possible and typically only new episodes from series are played and only content which user has still not watched will be played. This also means that if user "misses" some content from the flow, the system can move them to be in the flow again (this is not regarded as a rerun in this context). User can also see the exact sequence how content will be played as virtual TV guide. However, based on source, user can select each content from the guide to be played immediately or next, i.e. user can manually affect the flow. Thus, user experience is a flow and as an assumption next content is played right after the other ends making the experience similar to broadcasted channels.

In an embodiment, shared virtual channel might have different content for people in the social networks. The virtual channel has at least three layers in its addressing: 1) content list (guide; search terms), 2) description of type of programs (deeper described genres), and 3) sources to content. If other people cannot access the particular content in the guide, system can select an alternative content based on user's (sharer) privacy filter.

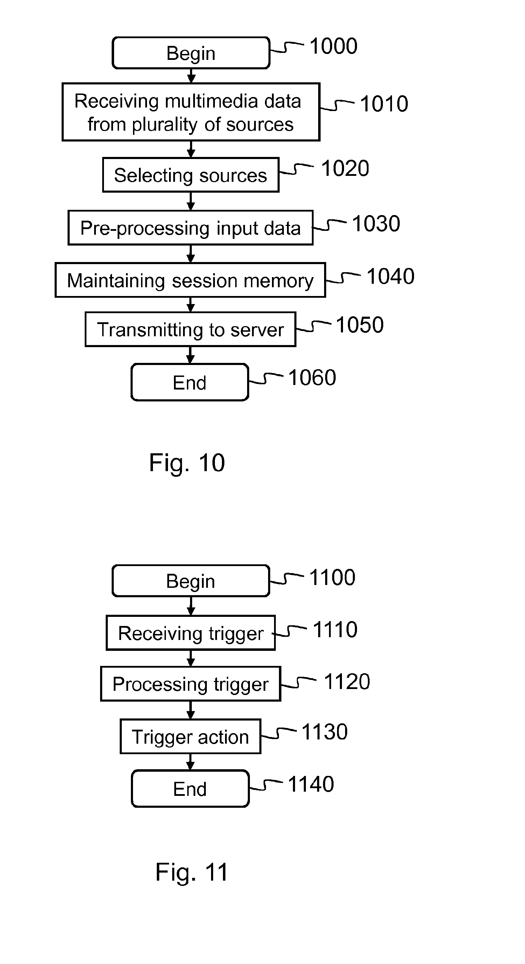

Fig. 10 shows a flow diagram showing operations of virtual channel hopping in accordance with an example embodiment of the invention. In step 1000, the method is started. In step 1010, multimedia data from a plurality of multimedia data sources is received. The multimedia data is received by the processing apparatus and may comprise sources, such as, television channels, internet streams, internet downloadable multimedia, local multimedia, virtual channels, favorites, multimedia provided by remote service providers and like. In step 1020, at least one multimedia source is selected based on profile parameter information. The profile parameter information may be defined by the user, automatically adjusted by the service based on the user behavioral information or both. The selected sources provide the input data for the user to select. In step 1030, at least two multimedia data sources are pre-processed based on received source signal from the controlling apparatus operated by the user. The user may select a source to be provided, for example a movie channel, and at the same time not only the selected channel but also a next multimedia input of the available inputs defined in step 1020. Alternatively, at least three multimedia inputs may be pre-processed and buffered to provide previous-next-current kind of pre-processing for the available inputs.

In step 1040, session memory is maintained. In response to receiving a source signal from the multimedia controlling apparatus based on a user selection, states of pre-processed and buffered multimedia data is maintained. Also already viewed data is maintained. Every time the user changes the input, also the pre-processed multimedia data inputs are updated and pre-processed. The user can also select known channels with different means than "up-down" e.g. selecting channel icons, writing name, selecting number etc. Then pre-processing relies on profile information, possible pre-processed data through that, and then stores hopped channels. The user can select if he wants to have the video (in case of streaming content) played from e.g. 5 min from the beginning. This potentially makes selecting easier as the beginning of the video is often not descriptive. The user can also select if a trailer is showed first. Also the viewing status of each viewed multimedia data is maintained, so that the user may continue viewing of the multimedia data when switching back to the same input later on. In step 1050, the session memory data is transmitted to the system server. Either all multimedia session data may be transmitted or only profile parameter data, selected inputs and channels or time stamp information of viewed multimedia data. In step 1060, the method is ended.

Fig. 11 shows a flow diagram showing operations of intelligent standby in accordance with an example embodiment of the invention. In step 1100, the method is started. In step 1110, a trigger is received by the processing apparatus. The trigger may originate from behavioral profile, controlling apparatus, active session or an external device. In step 1120, the trigger is processed by the processing apparatus and an action is defined in step 1130. In case behavioral profile trigger is received, following actions may be triggered: detecting commercials in the active input triggers showing social media application for the user, detecting receiving personal message triggers pausing active input data (e.g. movie) and showing the message to the user, detecting movement of the user (e.g. the controlling apparatus) triggers showing control information to the user and detecting late time of day (e.g. 9pm) triggers reducing volume (e.g. -20dB) of the active input data.

In case active session trigger is received, following actions 1130 may be triggered: detecting movie ending triggers showing control information to the user and detecting network problems triggers showing notification to the user.

In case controlling apparatus trigger is received, following actions 1130 may be triggered: detecting movement signal from the controlling apparatus triggers waking up of the processing apparatus.

In case external device trigger is received, following actions 1130 may be triggered: detecting doorbell signal from home control device triggers pausing the video, for example. In step 1140, the method is ended.

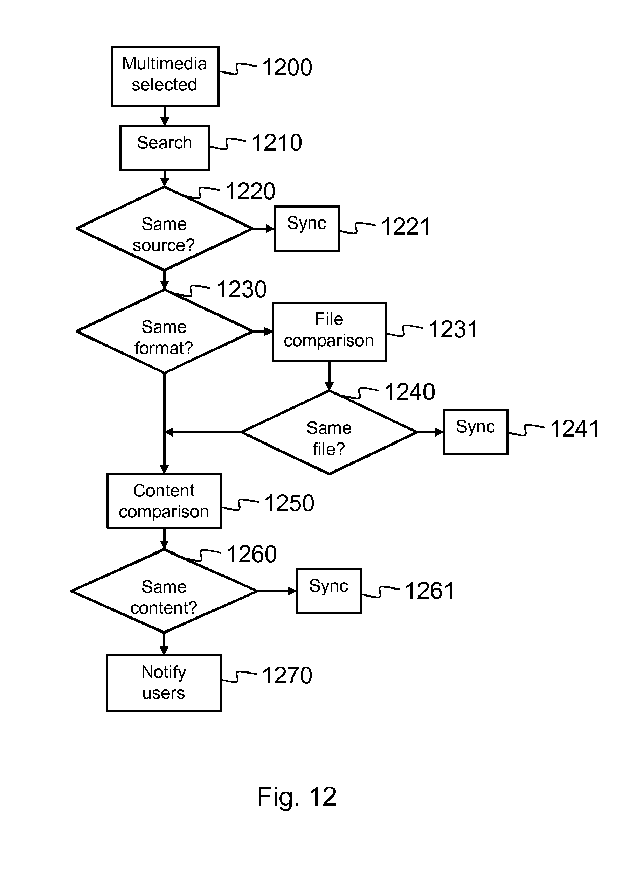

Fig. 12 shows a flow diagram showing operations of synchronization of multimedia content in accordance with an example embodiment of the invention. The content may be video or audio, for example. As an example, video content is explained here but similar mechanism applies also to other multimedia types. In step 1200, multimedia content (e.g. video) is selected. Source of the video is shared but if all users are not able to access the same source then the system enables giving an option to look for the same from another source by searching step 1210.

In step 1220, the found source is detected and evaluated if the detected source is the same as the selected source in step 1200. In case the source is the same, then synchronization between the source contents is applied in step 1221. Synchronization enables adding comments from different users to the played video content.

Regarding step 1221, same source means automatically that the synchronization is made for exactly the same file. Different users/players are synchronized using XML side file, which configures the video player. This file is shared between users wanted to be synchronized. XML file determines synchronizing point for identical video files. Example syntax may comprise following:
Syntax for synchronized play starting point

   ```
       <syncplaypoint>
        <Region>
         <play comment="[play start time in hh:mm:ss.sssssss]">[play start time in
       ms* 10,000]</play>
        </Region>
       </syncplaypoint>
```
Then for example

   ```
       <syncplaypoint>
        <Region>
         <play comment="0:07:03.0000523">4235230000</play>
        </Region>
       </syncplaypoint>
```

Inviter of the multimedia content sharing acts as a master and determines the starting time for the session, i.e. when the video starts to play from predetermined syncplaypoint.

If the master has cut (e.g. jump over part of the video) or edited the video film any way (keeping the file the same but marking with the side file just affecting the playback) the other playbacks are kept synchronized by jumping to the next start. In this situation master will issue related XML file with stop_1 following with start_1 and so on.

In case the source is not the same in step 1220, a format of the source video content is detected in step 1230. In case the formats of the different sources are the same, file comparison 1231 is triggered. The file comparison 1231 may be made e.g. using MD5 (Message-Digest algorithm) by taking e.g. 25 second snapshots and hash value calculated, the snapshots' hash values then compared to detect if the video files are the same or not.

If the video files are detected to be the same in step 1240, synchronization between the files is applied in step 1241 that corresponds to step 1221.

Files that are with same format (e.g. mp4) but are coming from different sources can naturally be different videos even when named similarly (as a search result). In such case as effective comparison method as possible needs to be applied. This can be done with fairly simple computational methods comparing hash values (e.g. SHA1, MD5) or bit-by-bit comparison. However, sharing over Internet is essential so bit-by-bit is not feasible (cannot compare simultaneously). Better option is to calculate hash from "master" file and then share that to others. Further, since critical data is not concerned but merely trying to resolve whether the files are the same for entertainment, hash can be calculated from partial file and so increasing efficiency. If e.g. snapshots taken from the videos' 15s - 45s are identical, we can fairly well assume that the files are the same or at least similar enough.

In case the formats of the different sources are not the same in step 1230 or the file is detected not to be the same in step 1240, content comparison step 1250 is triggered. In case the content is the same, synchronization between the files is applied in step 1261.

If previous steps 1220, 1230, 1240 fail, it is still possible to point out that the videos can be regarded as same in step 1260. This can be still the case even there are differences with e.g. localization (language, subtitles), aspect ratio, or cinema version vs. TV version with commercials. Only element that stays entirely the same with movies is music (it also is the case for many other audio tracks e.g. special effects). Even though audio track is different due to different speech etc. the music can be detected (or other unchanged audio tracks) behind it.

For example, audio fingerprint comparison may be applied, where e.g. particular songs are detected with following steps:
- Movies' soundtracks and in best case entire metadata are known (e.g. IMDB)
- One (or more) song(s) are selected
- Comparison is made whether this song appears in the file (and if they appear in the same order). Original file does not have to be involved.

If the video is unknown or the metadata is unknown, then both video files are compared for audio fingerprint. Statistically overlapping sample(s) is taken and if similarity is e.g. 80% then they are regarded as the same.

If the videos are having different content for example due to commercials then songs (or other unchanged audio) taken from different parts of the video can be used also to synchronize these two files. Virtual timestamps are placed along the video and XML side file is created and shared. This process is potentially very performance heavy. Cluster computing can be applied and all optimizing methods should be used. In case the content is detected to be the same in step 1260, synchronization between the video files is applied in step 1261. The step 1261 corresponds to steps 1221, 1241. In case the content is detected not to be the same in step 1260, the users should be notified in step 1270. At this point users synchronizing the multimedia content should select another source.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A multimedia processing apparatus comprising:
a communication interface for communicating with a multimedia router apparatus, a multimedia controlling apparatus, and an AN output apparatus;
at least one processor; and
at least one memory including computer program code;
the at least one memory and the computer program code configured to, with the at least one processor, cause the multimedia processing apparatus to:
connect the multimedia processing apparatus via a first local connection to the A/V output apparatus and via a second local connection to the multimedia router apparatus;
receive multimedia data from a plurality of multimedia data sources;
receive a source signal from the multimedia controlling apparatus in response to a user selection;
process the multimedia data from at least one of the plurality of multimedia data sources based on the source signal;
store the processed multimedia data from at least two multimedia data sources as favorite multimedia data in a user profile maintained by a system server;
form a virtual multimedia data channel based on the favorite multimedia data; and
provide the processed multimedia data of the virtual multimedia data channel for the AN apparatus.

2. The multimedia processing apparatus of claim 1, wherein the multimedia processing apparatus is connected via a first local connection to the A/V output apparatus and via a second local connection to the multimedia router apparatus.

3. The multimedia processing apparatus of claim 1 or 2, wherein the multimedia processing apparatus is connected via a fourth local connection to a local multimedia apparatus.

4. The multimedia processing apparatus of any of claims 1 to 3, wherein the at least one memory and the computer program code configured to, with the at least one processor, cause the multimedia processing apparatus to:
collect behavioral data based on at least one of the received multimedia data, received source signal and processed multimedia data; and
transmit the collected behavioral data for a system server.

5. The multimedia processing apparatus of any of claims 1 to 4, further comprising a beacon device for providing wireless control signals over a fifth local connection to at least one of the following devices:
an A/V apparatus;
a local multimedia apparatus; and
a multimedia controlling apparatus.

6. A method comprising:
connecting a multimedia processing apparatus to an A/V output apparatus and to a multimedia router apparatus;
receiving, by the multimedia processing apparatus, multimedia data from a plurality of multimedia data sources;
receiving a source signal, by the multimedia processing apparatus, from the multimedia controlling apparatus in response to the user selection;
processing the multimedia data from at least one of the plurality of multimedia data sources based on the source signal;
storing the processed multimedia data from at least two multimedia data sources as favorite multimedia data in a user profile maintained by a system server;
forming a virtual multimedia data channel based on the favorite multimedia data; and
providing the processed multimedia data of the virtual multimedia data channel for the AN apparatus.

7. The method of claim 6, further comprising:
connecting the multimedia routing apparatus via a third local connection to a network attached storage.

8. The method of claim 6 or 7, wherein the plurality of multimedia data sources comprising:
a local multimedia apparatus;
a local network attached storage;
a remote streaming multimedia source;
a digital multimedia broadcasting source; and
a remote network attached storage.

9. The method of any of claims 6 to 8, further comprising:
transceiving configuration information between a server apparatus, the multimedia controlling apparatus and the multimedia processing apparatus;
defining a service account, by the system server, for a multimedia service; and
maintaining multimedia service data for the service account at the system server.

10. The method of any of claims 6 to 9, further comprising:
providing a first multimedia data for the A/V apparatus for displaying on a display of the A/V apparatus; and
providing a second multimedia data for the multimedia controlling apparatus for displaying on a display of the multimedia controlling apparatus.

11. The method of any of claims 6 to 10, further comprising:
connecting the multimedia processing apparatus to at least two A/V output apparatuses; and
providing a first processed multimedia data for a first A/V apparatus and a second processed multimedia data for a second A/V apparatus.

12. A computer program embodied on a computer readable medium comprising computer executable program code, which when executed by at least one processor of a multimedia processing apparatus, causes the multimedia processing apparatus to:
connect the multimedia processing apparatus via a first local connection to the A/V output apparatus and via a second local connection to the multimedia router apparatus;
receive multimedia data from a plurality of multimedia data sources;
receive a source signal from the multimedia controlling apparatus in response to a user selection;
process the multimedia data from at least one of the plurality of multimedia data sources based on the source signal;
store the processed multimedia data from at least two multimedia data sources as favorite multimedia data in a user profile maintained by a system server;
form a virtual multimedia data channel based on the favorite multimedia data; and
provide the processed multimedia data of the virtual multimedia data channel for the AN apparatus.

13. A multimedia controlling apparatus comprising:
a communication interface for communicating with a multimedia router apparatus and a multimedia processing apparatus;
a user input device;
at least one processor; and
at least one memory including computer program code;
the at least one memory and the computer program code configured to, with the at least one processor, cause the multimedia controlling apparatus to:
connect the multimedia controlling apparatus to the multimedia router apparatus;
receive multimedia data from a plurality of multimedia data sources;
provide information of the plurality of multimedia data sources for a user on a display of the multimedia controlling apparatus;
receive user selection information for at least one of the plurality of multimedia data sources;
transmit a source signal for the multimedia processing apparatus in response to user selection information;
process the multimedia data from the at least one of the plurality of multimedia data sources based on the source signal;
provide information of the processed multimedia data from at least two multimedia data sources to be stored as favorite multimedia data in a user profile maintained by a system server;
form a virtual multimedia data channel based on the favorite multimedia data; and
provide at least one multimedia data of the virtual multimedia data channel on the display of the multimedia controlling apparatus based on the user selection information.

14. The multimedia controlling apparatus of claim 13,
wherein the at least one memory and the computer program code configured to, with the at least one processor, cause the multimedia controlling apparatus to:
detect a gesture on the touch-sensitive display by a user;
determine a control signal based on the detected gesture; and
transmit the control signal for the multimedia processing apparatus.

15. The multimedia controlling apparatus of claim 13 or 14, further comprising:
a communication interface for communicating with a local multimedia apparatus using a sixth local connection, wherein the sixth local connection comprises at least one of the following:
an infrared (IR) connection;
a wireless non-cellular wireless connection; and
a wireless local area network (WLAN) connection.
